# EUROPEAN PATENT APPLICATION

(11) **EP 4 181 050 A1**
(43) Date of publication of application: **17.05.2023**
(21) Application number: 21837323.1
(22) Date of filing: 28.06.2021
(51) Int. Cl.: G06Q 50/26, G06Q 40/06

(54) **INFORMATION PROCESSING METHOD, PROGRAM, AND INFORMATION PROCESSING DEVICE**

(30) Priority: 08.07.2020 JP 2020117601; 08.02.2021 JP 2021018394
(71) Applicant: Sumitomo Mitsui Construction Co., Ltd., Tokyo 104-0051 (JP)
(72) Inventor: KASUGA, Akio, Tokyo 104-0051 (JP)
(74) Representative: Bardehle Pagenberg Partnerschaft mbB Patentanwälte Rechtsanwälte
(86) International application number: PCT/JP2021/024305
(87) International publication number: WO 2022/009715

(57) **Abstract**

Provided is an information processing method performed by an information processing apparatus, the information processing method including: acquiring contract information on a contract related to a disaster prevention project to develop an infrastructure, the contract being an outcome-based contract in which payment is made on a basis of a disaster reduction outcome through the infrastructure (S102); acquiring fund data related to a fund set on a basis of the contract information (S110); and associating the fund data with discrimination information on the disaster prevention project (S116).

## Description

### Technical Field

The present invention relates to an information processing method, a program, and an information processing apparatus.

### Background Art

In recent years, the importance of developing infrastructures (hereinafter also called "Infra") as countermeasures for disasters or the like predicted to occur to prevent damage has been advocated (see, for example, Non-Patent Document 1).

### Citation List

### Non-Patent Document

Non-Patent Document 1: Satoshi Fujii, "Estimation of huge economic damage by Nankai trough earthquake and the mitigation effects by countermeasures", JSCE magazine, January in 2020, Vol. 105, No. 1, P. 6-9

### Summary

### Technical Problem

However, the development of infrastructures requires huge expenses, and raising of the funds is not easy. Meanwhile, the results of trial calculation by various evaluation organizations show that the development of infrastructures produces economic outcomes through the development of the infrastructures, for example, disaster reduction outcomes in case of the occurrence of disasters, economic outcomes through the activation of surrounding areas, or the like. Further, an outcome-based contract in which higher payment is made in exchange for the provision of better services has been known, by which effects such as the exertion of originality and ingenuity of private persons, the trial of new services anticipating outcomes, improvement in existing services, and the growth and promotion of excellent business operators are expected.

In view of this, the present invention has an object of providing, with attention paid to the outcome-based contract, a new scheme for fund raising in an infrastructure development project by returning an economic outcome through infrastructure development to a business operator (for example, a fund raiser) or a fund provider.

### Solution to Problem

**An** information processing method according to an aspect of the present invention is an information processing method performed by an information processing apparatus, the information processing method including: acquiring contract information on a contract related to a disaster prevention project to develop an infrastructure, the contract being an outcome-based contract in which payment is made on a basis of a disaster reduction outcome through the infrastructure; acquiring fund data related to funds set on a basis of the contract information; and associating the fund data with discrimination information on the disaster prevention project.

### Advantageous Effects of Invention

According to the present invention, it is possible to provide a new scheme for fund raising in an infrastructure development project using an outcome-based contract in which an economic outcome through infrastructure development is returned to a business operator or a fund provider.

### Brief Description of Drawings

Fig. 1 is a diagram showing an example of the configuration of an information processing system according to an embodiment of the present invention.
Fig. 2 is a diagram showing an example of the configuration of an information processing apparatus 10 according to an embodiment of the present invention.
Fig. 3 is a diagram showing an example of the configuration of an information processing apparatus 20 according to an embodiment of the present invention.
Fig. 4 is a diagram showing an example of the evaluation data of a specific example 1 in the present invention.
Fig. 5 is a diagram showing an example of the public data of the specific example 1 in the present invention.
Fig. 6 is a diagram showing an example of the coefficient data of the specific example 1 in the present invention.
Fig. 7 is a sequence diagram showing an example of processing related to fund raising according to an embodiment of the present invention.
Fig. 8 is a sequence diagram showing an example of payment processing according to an embodiment of the present invention.

### Description of Embodiments

Preferred embodiments of the present invention will be described with reference to the accompanying drawings. Note that components denoted by the same symbols have the same or similar configurations in the respective drawings.

### [Embodiments]

### <System>

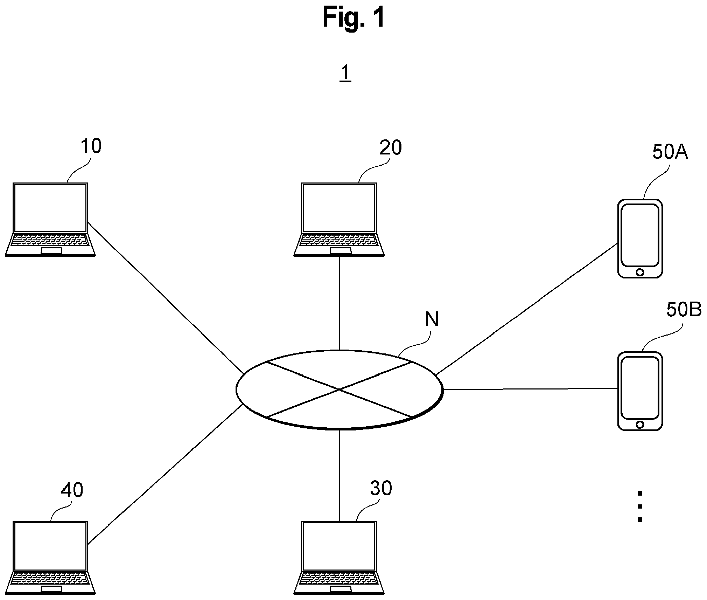

Fig. 1 is a diagram showing an example of the configuration of an information processing system 1 according to an embodiment of the present invention. As shown in Fig. 1, the information processing system 1 includes respective information processing apparatuses 10, 20, 30, 40, and 50 (hereinafter also be expressed as "respective information processing apparatuses 10 to 50"), and the respective information processing apparatuses 10 to 50 are able to transmit and receive data to and from each other via a network N. Note that information processing apparatuses 50A and 50B will also be expressed as information processing apparatuses 50 when they are not distinguished from each other.

Here, the outline of a new scheme for fund raising realized by the information processing system 1 shown in Fig. 1 will be described. For example, the information processing apparatus 10 mainly used by an infrastructure owner makes a trial calculation of the development cost or the like of an infrastructure development project, and generates and stores contract information on an outcome-based contract based on an economic outcome through infrastructure development.

The outcome-based contract is, for example, PFS (Pay For Success), and includes a contract in which an owner entrusts a business operator with a project, sets an outcome indicator corresponding to a problem to be solved, and links a payment to the achievement or improved situation of the outcome indicator. Under the outcome-based contract, a business operator entrusted with a project can raise funds from a fund provider (such as an investor) in exchange for the distribution of a future payment (the business operator is not necessarily required to pay a dividend to the investor or the like), while an owner entrusting the project pays an amount of money only after an effect is produced. Therefore, the outcome-based contract is advantageous for both the project entrusting side and the project entrusted side. The information processing system 1 shown in Fig. 1 employs the outcome-based contract, and requests, for example, a business operator to raise funds for an expense related to infrastructure development and secure a financial resource related to the infrastructure development.

**The** information processing apparatus 20 mainly used by a business operator, for example, a private business operator such as a financial organization such as a bank or an investment fund, an insurance company such as a nonlife insurance company, and a company such as a construction company that performs an infrastructure development project performs fund raising processing to raise funds from oneself or other persons (for example, investors or the like) on the basis of the content of the infrastructure development project or contract information on an outcome-based contract, and manages fund data related to the raised funds. Further, the information processing apparatus 20 transmits fund data related to the raised funds to a management destination that manages funds for the infrastructure development project (hereinafter also called the "management destination of the infrastructure development project"). Thus, the raised funds are applied to a financial resource for the infrastructure development project. Note that the business operator can also be a fund raiser who raises funds for the infrastructure development project.

When funds are raised from other persons, the information processing apparatuses 50 mainly used by other persons determine an amount of money invested to the infrastructure development project on the basis of investment information on the infrastructure development project open to the public by the business operator and transmit an investment request including the amount of money to the information processing apparatus 20. Thus, the business operator can raise funds from one or more other persons (fund providers).

**The** information processing apparatus 30 mainly used by the management destination of the infrastructure development project manages the financial resource for the infrastructure development project, and updates the financial resource for the infrastructure development project on the basis of the fund data transmitted from the information processing apparatus 20. The financial resource is appropriately used to perform the infrastructure development project.

**The** information processing apparatus 40 mainly used by an organization that evaluates an infrastructure performs evaluation processing to evaluate the developed infrastructure and calculates an economic outcome through the infrastructure development. In order to notify the infrastructure owner of an evaluation result, the information processing apparatus 40 transmits a report (evaluation data) related to the evaluation result to the information processing apparatus 10.

**The** information processing apparatus 10 performs reward processing to determine an amount of money paid to the business operator or a prescribed right on the basis of the evaluation result of the infrastructure and the outcome-based contract and pay the determined amount of money or provide the prescribed right. Through the reward processing, the information processing apparatus 20 receives payment data related to the amount of money (payment) as a trade-off (return) for an investment in the infrastructure development project or data related to the prescribed right. Where necessary, the information processing apparatus 20 determines a dividend on the basis of the payment data and transmits dividend data related to the dividend to other persons (fund providers such as investors).

Thus, it is possible to provide a scheme in which a profit included in an economic outcome through infrastructure development can be appropriately paid to a business operator on the basis of an outcome-based contract or a prescribed right can be provided, and is possible to facilitate fund raising in an infrastructure development project high in a development cost.

Next, the respective information processing apparatuses 10 to 50 and the users thereof will be described. As described in the above example, the information processing apparatus 10 includes one or more information processing apparatuses used by an infrastructure owner. The infrastructure owner may be, for example, any of a country, a country organization, a government, a local municipal entity, a private company, an individual, or the like having an infrastructure, or may be a person who manages an infrastructure development project. The infrastructure is, for example, a social infrastructure for life, industry, or the like, and includes a structure such as a road, a breakwater, a water supply and sewerage system, a power generation plant, a power network, a communication network, a harbor, an airport, a bridge, a facility, and a building.

**The** infrastructure owner inputs contract information on an outcome-based contract related to the infrastructure development project to the information processing apparatus 10, or generates and stores the contract information using the information processing apparatus 10 and transmits the same to the information processing apparatus 20 where necessary. The outcome-based contract related to the infrastructure development project is, for example, a contract made between the infrastructure owner and a business operator entrusted with the infrastructure development project, and includes a contract for paying at least part of an economic profit through infrastructure development from the infrastructure owner to the business operator under a prescribed condition. Further, the outcome-based contract may include a contract for granting a prescribed right from the country, the government, or the like to the business operator under a prescribed condition.

The information processing apparatus 20 includes, for example, one or more information processing apparatuses used by a business operator entrusted with an infrastructure development project. The business operator is, for example, a company or the like such as a financial organization such as a bank or an investment fund and a construction company that performs the infrastructure development project, and a plurality of companies or the like may raise funds collaboratively. Note that the fund raising here includes raising funds from users other than the business operator using the information processing system 1 or applying the own fund of the business operator.

For example, the business operator performs fund raising processing using the information processing apparatus 20 on the basis of an outcome-based contract related to the infrastructure development project to raise funds. In order to apply the raised funds to a financial resource for the infrastructure development project, the information processing apparatus 20 transmits fund data related to the raised funds to the information processing apparatus 30.

**The** information processing apparatus 30 includes, for example, one or more information processing apparatuses used by a management destination that manages a financial resource for an infrastructure development project. The management destination is, for example, an organization, a company, or the like that manages funds for the infrastructure development project, and includes a company, a group, a business operator, or the like that handles the infrastructure development project. The management destination manages the flow of the funds for the infrastructure development project using the information processing apparatus 30.

**The** information processing apparatus 40 includes one or more information processing apparatuses used by a prescribed organization or the like that evaluates an economic outcome through infrastructure development. The prescribed organization is, for example, a third party organization (evaluation organization) able to fairly and appropriately evaluate the economic outcome, and includes an organization authorized by a country, a government, or the like. The information processing apparatus 40 evaluates the economic outcome through the infrastructure development to make a trial calculation of an economic profit, evaluates an infrastructure according to an evaluation item, stores an evaluation result, or transmits a report (evaluation data) including the evaluation result to the information processing apparatus 10.

**The** information processing apparatuses 50 are, for example, information processing apparatuses used by other persons who make an investment in an infrastructure development project. The other persons are, for example, investors, or the like, and include individuals, companies, or the like that make an investment in favor of the infrastructure development project. The other persons refer to investment information on the infrastructure development project transmitted from the information processing apparatus 20 and determine investment amounts. The information processing apparatuses 50 transmit the investment requests including the investment amounts determined by the other persons to the information processing apparatus 20. Note that the information processing apparatuses 50 are not necessarily required when a business operator prepares required funds by himself/herself in the information processing system 1.

**The** respective information processing apparatuses 10 to 50 described above are, for example, personal computers, PDAs (Personal Digital Assistants), mobile terminals such as smart phones, tablet terminals, servers, or the like, and may be expressed as the n-th information processing apparatuses (1 ≤ n ≤ 5) to be differentiated from each other.

### <Configuration>

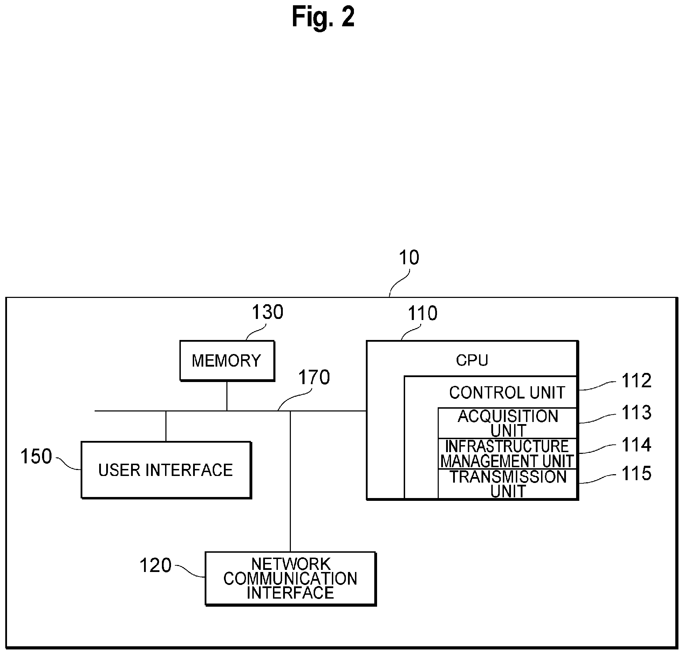

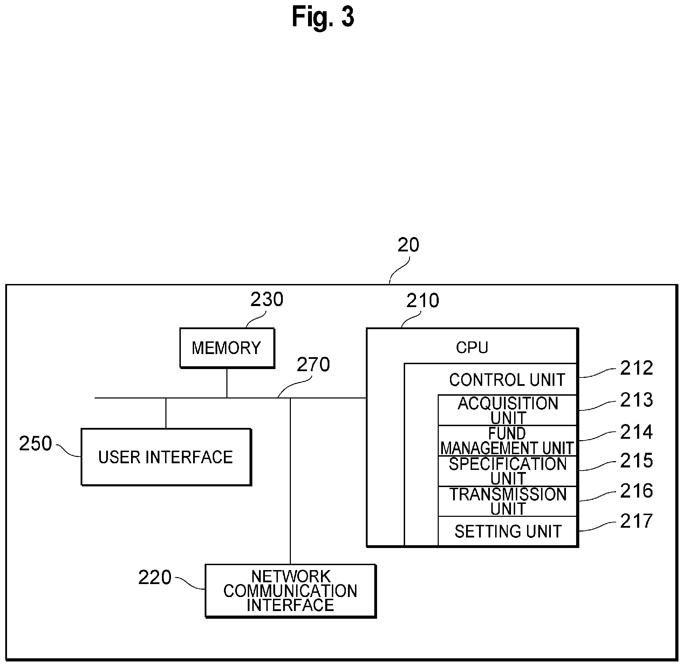

Fig. 2 is a diagram showing an example of the configuration of the information processing apparatus 10 according to an embodiment of the present invention. Fig. 3 is a diagram showing an example of the configuration of the information processing apparatus 20 according to an embodiment of the present invention. Hereinafter, the processing of the respective apparatuses will be described using four specific examples.

### (Specific Example 1)

A specific example 1 will illustrate an infrastructure disaster prevention project as an infrastructure development project. An infrastructure owner may entrust an outside business operator with an infrastructure disaster prevention project to develop an infrastructure in preparation for a disaster that possibly occurs in the future. On this occasion, a plurality of candidates for the business operator are requested to tender for the plan, payment, or the like of the infrastructure disaster prevention project, and an outcome-based contract PFS is made between a selected business operator and the infrastructure owner.

Next, in case of the occurrence of a disaster, the infrastructure owner makes a payment to the business operator of the infrastructure disaster prevention project on the basis of a disaster reduction outcome through the infrastructure in exchange for supplying funds to the infrastructure development project or raising funds and performing the infrastructure development project. The disaster includes, for example, an earthquake, a tsunami, a high tide, a typhoon, or the like.

In the specific example 1, the information processing apparatus 10 that performs at least part of the processing described above includes one or more processing units (CPU(s): Central Processing Unit(s)) 110, one or more network communication interfaces 120, a memory 130, a user interface 150, and one or more communication buses 170 that connect these constituting elements to each other.

The memory 130 is, for example, a high-speed random access memory such as a DRAM, an SRAM, and a random access solid-state storage device, may be a non-volatile memory such as one or more magnetic disk storage devices, an optical disk storage device, a flash-memory device, and a non-volatile solid-state storage device, or may be a non-transitory recording medium.

**The** memory 130 stores data used by the information processing system 1. For example, the memory 130 stores data related to the infrastructure disaster prevention project. The data related to the infrastructure disaster prevention project includes, for example, evaluation data including a disaster prevention cost, an expected economic outcome (disaster reduction outcome), or the like, public data related to the infrastructure disaster prevention project open to the business operator, contract information on an outcome-based contract for the infrastructure disaster prevention project, or the like for each area of infrastructure development. The contract information includes at least part of the public data, for example, a contract period, a payment condition, or the like.

Further, another example of the memory 130 may include one or more storage devices installed away from the CPU 110. In an embodiment, the memory 130 stores a program run by the CPU 110, a module, a data structure, or their subsets.

**The** CPU 110 constitutes, by running the program stored in the memory 130, a control unit 112, an acquisition unit 113, an infrastructure management unit 114, and a transmission unit 115.

The control unit 112 controls general processing related to the infrastructure disaster prevention project. The acquisition unit 113 acquires data transmitted from respective information processing apparatuses. For example, the acquisition unit 113 acquires condition information on a payment condition based on the outcome-based contract transmitted from the information processing apparatus 20 or acquires evaluation data including an evaluation result through the infrastructure development transmitted from the information processing apparatus 40.

**The** infrastructure management unit 114 manages data related to the infrastructure disaster prevention project. For example, the infrastructure management unit 114 stores acquired respective data in the memory 130 or reads data inside the memory 130 where necessary.

Further, the infrastructure management unit 114 calculates a payment paid to the business operator when the prescribed condition of the outcome-based contract is satisfied. The prescribed condition of the outcome-based contract includes the occurrence of a disaster, the expiration of a contract period that corresponds to a prescribed period, or the like.

The transmission unit 115 transmits respective data to a prescribed information processing apparatus via the network communication interface 120. For example, the transmission unit 115 transmits public data to the information processing apparatus 20 to collect a capital related to the infrastructure disaster prevention project, transmits blank evaluation data to the information processing apparatus 40, or transmits the payment data of a determined payment to the information processing apparatus 20.

Next, the information processing apparatus 20 mainly used by a business operator entrusted with an infrastructure disaster prevention project will be described. As shown in Fig. 3, the information processing apparatus 20 includes one or more processing units (CPUs) 210, one or more network communication interfaces 220, a memory 230, a user interface 250, and one or more communication buses 270 that connect these constituting elements to each other. The respective units shown in Fig. 3 have the same functions as those of the respective units having the same names shown in Fig. 2 and perform the same processing. Hereinafter, points different between the respective units shown in Fig. 3 and the respective units shown in Fig. 2 will be described.

The memory 230 stores data used by the information processing system 1. For example, the memory 230 stores contract information on an outcome-based contract related to an infrastructure disaster prevention project or stores data related to funds for an infrastructure development project.

**The** CPU 210 constitutes, by running a program stored in the memory 230, a control unit 212, an acquisition unit 213, a fund management unit 214, a specification unit 215, a transmission unit 216, and a setting unit 217.

The control unit 212 controls the processing of the respective units that will be described later, and performs processing related to fund raising for the infrastructure disaster prevention project.

The acquisition unit 213 acquires contract information on a contract related to the disaster prevention project to develop an infrastructure (infrastructure disaster prevention project), the contract being an outcome-based contract in which payment is made on the basis of a disaster reduction outcome through the infrastructure. The contract information includes, for example, a contract period, a payment condition, or the like. The disaster reduction outcome includes, for example, at least one of the following four examples.
- The economic value of a social capital/private capital that can be maintained (prevented from being damaged) through the development of the infrastructure. For example, a direct damage amount in a case in which the infrastructure is not developed. As a specific example, the economic value of a highway (social capital) or an office building (private capital) that is maintained by the presence of a breakwater in case of the occurrence of tsunami.
- An economic value that can be created by the above social capital/private capital. For example, a subsidiary damage amount in a case in which the infrastructure is not developed. As a specific example, the toll of the highway or the rent of the office building in the above example or the like.
- A value (for example, the reduction of CO₂ emissions) related to environmental protection (or environmental preservation) through the development of the infrastructure.
- Other outcomes such as tax breaks/reduction through the development of the infrastructure.

Further, the acquisition unit 213 acquires fund data related to funds set on the basis of the contract information on the outcome-based contract. For example, the contract information includes the expense of the infrastructure disaster prevention project, and raised funds are set on the basis of the expense. The funds include own funds, bonds, or the like. The fund data includes, for example, fund data related to own funds and fund data related to funds raised from other persons.

Further, the acquisition unit 213 may acquire payment data transmitted from the information processing apparatus 10 when a prescribed condition included in the outcome-based contract is satisfied. For example, the acquisition unit 213 acquires payment data related to a payment paid from an infrastructure owner when the contract of the outcome-based contract expires or when a disaster occurs during a contract period.

The fund management unit 214 stores fund data related to raised funds in the memory 230 in association with discrimination information on the infrastructure disaster prevention project. The discrimination information on the infrastructure disaster prevention project includes information that shows the infrastructure disaster prevention project and enables the discrimination of the infrastructure disaster prevention project from other projects. Further, the discrimination information may be generated by the information processing apparatus 20, or may be included in acquired contract information on the outcome-based contract. The memory 230 stores fund data related to funds raised for the infrastructure disaster prevention project, contact information (such as an IP address and an e-mail address of a person in charge or the like) on a management destination at which a resource for the infrastructure disaster prevention project is managed, or the like in association with the discrimination information.

Thus, with the use of the outcome-based contract in which payment is made on the basis of a disaster reduction outcome in the infrastructure disaster prevention project, it is possible to give an incentive for developing a better infrastructure to the business operator in order to increase a return for a project (investment) and enhance the motivation of the business operator, an investor, or the like for fund-raising. Further, unlike a cat bond or a resilience bond in which the payment of a dividend to an investor is performed for every prescribed period and processing is caused correspondingly, payment data is transmitted only after an effect is produced or a payment condition is satisfied with the use of the outcome-based contract, whereby it is possible to improve the processing efficiency of the information processing apparatus 20. Further, with the use of the outcome-based contract, it is possible to reduce the number of communication times between the information processing apparatus 10 used by the infrastructure owner and the information processing apparatus 20 used by the business operator and eliminate the need to apply a load to a communication band.

The specification unit 215 specifies the management destination of the infrastructure disaster prevention project on the basis of discrimination information on the infrastructure disaster prevention project. For example, the specification unit 215 specifies, on the basis of discrimination information associated with fund data applied to a financial resource, contact information on a management destination associated with the same discrimination information by referring to the memory 230.

The transmission unit 216 transmits fund data related to raised funds to a specified management destination. For example, the transmission unit 216 transmits the fund data using contact information on the specified management destination. In this case, the fund data is data showing that the raised funds are applied to a financial resource, such as the notification of the completion of transfer to a prescribed account. Thus, it is possible to apply the funds raised for the infrastructure disaster prevention project to the financial resource for the infrastructure disaster prevention project and notify the management destination of the completion of the application to the financial resource.

The setting unit 217 sets a payment condition related to payment on the basis of the contract information on the outcome-based contract. For example, the setting unit 217 sets a payment condition such as determining a payment with a prescribed arithmetic formula for the economic profit of a disaster reduction outcome included in the contract information.

In this case, the transmission unit 216 may transmit condition information including the payment condition to the transmission source of the contract information on the outcome-based contract. For example, the transmission unit 216 transmits the condition information including the payment condition such as an arithmetic formula to the information processing apparatus 10 that is the transmission source of the contract information. Contact information on the transmission source of the contract information may be stored in the memory 230 in association with discrimination information on the infrastructure disaster prevention project or discrimination information on the contract information.

Thus, it is possible to set the payment condition of the infrastructure owner on the side of the business operator and possible for the business operator to present the various conditions of the outcome-based contract of the infrastructure disaster prevention project according to his/her own plan.

Further, when a contract period and an amount of money corresponding to a disaster reduction outcome are included in the contract information on the outcome-based contract, the setting unit 217 may set, on the basis of at least the contract period and the amount of money corresponding to the disaster reduction outcome, a first coefficient (hereinafter also expressed as "α") applied to the amount of money corresponding to the disaster reduction outcome if damage occurs in an infrastructure during the contract period. For example, the higher the amount of money corresponding to the disaster reduction outcome or the longer the contract period, the setting unit 217 may set the first coefficient to be lower.

Thus, it is possible to appropriately set a payment in case of the occurrence of a disaster on the basis of the contract content of the outcome-based contract. Note that payment may be made a plurality of times when a disaster occurs a plurality of times within a prescribed contract period (for example, about 50 years).

Further, when a contract period and a development cost (development expense) are included in the contract information on the outcome-based contract, the setting unit 217 may set, on the basis of at least the contract period and the development cost, a second coefficient (hereinafter also expressed as "β") applied to the development cost if damage occurs in an infrastructure during the contract period. For example, the higher the development cost or the longer the contract period, the setting unit 217 may set the second coefficient to be lower.

**Thus,** it is possible to appropriately set a payment in case of the nonoccurrence of a disaster on the basis of the contract content of the outcome-based contract.

The acquisition unit 213 may acquire probability data related to the probability of the occurrence of damage from a prescribed database. For example, the acquisition unit 213 acquires, from the databases of organizations studying the occurrence of disasters or the like, probability data showing the probability of the occurrence of a disaster announced by these organizations. If the reference destination or the like of the prescribed database is registered in advance, the acquisition unit 213 may specify the database from the reference destination where necessary and acquire the probability data.

In this case, the setting unit 217 may set the first coefficient and the second coefficient further on the basis of the acquired probability data. For example, the setting unit 217 may integrate the probability data, the contract period, the amount of money corresponding to the disaster reduction outcome, and the development cost with each other and set the first coefficient and the second coefficient using a prescribed calculation formula. As a specific example, the setting unit 217 decreases the first coefficient or the second coefficient when the probability of the occurrence of a disaster is high and the contract period is long, and increases the first coefficient or the second coefficient when the probability of the occurrence of the disaster is low and the contract period is long.

Further, the setting unit 217 may set a calculation formula using a first coefficient or a second coefficient as a parameter so that a payment calculated by the set first coefficient or the second coefficient becomes raised funds or more. Further, the setting unit 217 may perform a simulation on the basis of past cases and set an appropriate first coefficient or a second coefficient from a calculation formula using a first coefficient or a second coefficient as a parameter. Further, the setting unit 217 may set an appropriate first coefficient or a second coefficient using a machine-learned learning model for calculating the appropriate first coefficient or the second coefficient from the probability data of a plurality of cases, a contract period, an amount of money corresponding to a disaster reduction outcome, and a development cost.

Thus, on the basis of the contract content of the outcome-based contract and the probability of the occurrence of a disaster, it is possible to more appropriately set a payment in case of the occurrence of the disaster or in case of the nonoccurrence of the disaster. For example, it is possible to improve the adequacy of the setting of a payment with the use of the probability of occurrence.

Further, the acquisition unit 213 may perform control to transmit investment information on raised funds to other information processing apparatuses 50 and acquire investment requests including investment amounts set on the basis of the investment information from the other information processing apparatuses 50.

For example, when raised funds for the infrastructure disaster prevention project are large, the control unit 212 determines a minimum investment amount from other persons, a fund raising period, or the like and makes investment information including determined items open to the public through a web page or the like. In this case, the acquisition unit 213 transmits, when acquiring access requests to the web page from other information processing apparatuses 50, the investment information in the web page to the other information processing apparatuses 50. Note that the transmission of the investment information may be performed by the transmission unit 216.

In this case, the other information processing apparatuses 50 having received the investment information may transmit, on the basis of the operation of investors or the like, investment requests including investment amounts set on the basis of the investment information to the information processing apparatus 20. The fund management unit 214 of the information processing apparatus 20 may store fund data related to the respective investment amounts included in the respective investment requests acquired from the other information processing apparatuses 50 in association with discrimination information on the infrastructure disaster prevention project. For example, the fund management unit 214 may store, for each of the investment requests, user discrimination information for discriminating other persons and fund data related to an investment amount in the memory 230.

Thus, it is possible to widen the range of fund providing targets and further facilitate fund raising.

A construction company or the like (a person entrusted by the infrastructure owner or the business operator or the business operator himself/herself) that performs the infrastructure disaster prevention project constructs a new infrastructure or reconstructs and develops an infrastructure using a financial resource. Here, when a disaster occurs within a contract period, a prescribed organization evaluates a damage amount (disaster reduction outcome) prevented through the developed infrastructure and reports the evaluation result of the infrastructure to the infrastructure owner. At this time, the information processing apparatus 40 transmits evaluation data including the evaluation result to the information processing apparatus 10.

When the prevention of damage through the developed infrastructure is acknowledged by the evaluation organization, the information processing apparatus 10 multiplies an amount of money corresponding a disaster reduction outcome by a first coefficient (α) to determine a payment according to the outcome. The information processing apparatus 10 performs payment processing to the business operator on the basis of the determined payment and transmits payment data related to the payment to the information processing apparatus 20.

Further, when a disaster does not occur during a contract period, the contract period expires and the information processing apparatus 10 multiplies a development cost by a second coefficient (β) to determine a payment. The information processing apparatus 10 performs payment processing to the business operator on the basis of the determined payment and transmits payment data related to the payment to the information processing apparatus 20. The calculation method for calculating a payment described above is an example of a case in which a first coefficient and a second coefficient are numeric values expressed by %, but other calculation methods may be used depending on the values of the first coefficient and the second coefficient.

**As** described above, it is possible to apply the embodiments of the present invention to the infrastructure disaster prevention project in the specific example 1. According to the specific example 1, the business operator entrusted with the infrastructure disaster prevention project on the basis of the outcome-based contract is expected to construct a better infrastructure in order to increase a payment as a trade-off, which is advantageous for both the infrastructure owner and the business operator.

### (Specific Example 2)

A specific example 2 will illustrate a building earthquake-resisting project as an infrastructure development project. A building owner may entrust an outside business operator with a building earthquake-resisting project to make a building earthquake-resistant in preparation for a disaster that possibly occurs in the future. The specific example 2 is applicable to the earthquake resistance of a structure accompanied by the charge of a rent, and a building is an example of a structure accompanied by the charge of a rent. In the specific example 2, an outcome-based contract PFS is, for example, made between a business operator and an infrastructure owner like the specific example 1.

**As** described above, an infrastructure includes a structure accompanied by the charge of a rent, an infrastructure disaster prevention project includes construction related to the earthquake resistance of a structure, and contract information on an outcome-based contract includes a payment condition based on a rent income increased due to earthquake resistance in the specific example 2. The flow and processing of data in respective information processing apparatuses in the specific example 2 are the same as the flow and processing of data in the specific example 1.

Thus, the present invention can be applied to the earthquake-resisting project of a structure, and a business operator can receive at least part of an increase in rent income due to earthquake resistance. Moreover, when the prevention of damage through the earthquake resistance of the structure is acknowledged in case of the occurrence of a disaster within a contract period, a disaster reduction outcome (prevented damage amount) is multiplied by a first coefficient and a multiplied amount is paid to the business operator. The business operator is expected to perform more reliable earthquake-resisting construction in order to increase a payment as a trade-off.

Note that the payment may not be made when the contract period expires without the occurrence of a disaster in the specific example 2. Alternatively, at least part of the increase in rent income due to the earthquake resistance is paid to the business operator for each prescribed period.

In the specific example 2, the contract period is, for example, about 20 to 30 years. When earthquake-resisting standards fixed by respective countries are updated, existing structures not satisfying the new earthquake-resisting standards are examples of targets. Through the earthquake resistance of the existing structures not satisfying the new earthquake-resisting standards to satisfy the new standards, the owners of the structures are given an advantage such as the exemption of a fixed property tax.

### (Specific Example 3)

In a specific example 3, the outcome of an outcome-based contract in an infrastructure development project is not triggered by the occurrence of a disaster but is triggered by a case in which it is acknowledged by a prescribed organization that a surrounding area has been developed through a developed infrastructure and the economic outcome (such as a tax revenue and the alleviation of a traffic jam) of an infrastructure owner has increased. In this case, a payment is an amount of money obtained by multiplying an amount of money corresponding to the increased economic outcome by a third coefficient. Note that the surrounding area may be set on an administrative district basis such as a town and a city including the developed infrastructure. Further, a district adjacent to a district including the developed infrastructure may also be included in the surrounding area.

Further, a business operator entrusted with the infrastructure development project may be assigned the management of the infrastructure or may be granted a fee collection right to collect a prescribed fee such as the usage fee of the developed infrastructure (such as a highway and a railroad). In this case, the information processing apparatus 10 calculates at least part of a fee related to the developed infrastructure and transmits fee data related to the fee to the information processing apparatus 20 for every prescribed period.

**As** described above, the outcome-based concept of PFS is applied to a project called PPP (Public Private Partnership) in the information processing system 1 in the specific example 3. Here, the PPP is a generic name of a public-private partnership project, and includes an order system in which private business operators are asked to make proposals for competition and a most excellent private business operator is selected and requested to perform fund raising as well as operations from design to administration in the development of an infrastructure.

In the specific example 3, the transmission unit 115 of the information processing apparatus 10 transmits to the information processing apparatus 20 contract information on a contract related to a development project to develop the infrastructure, the contract being an outcome-based contract in which payment is made on the basis of an economic outcome through the infrastructure after the lapse of a prescribed contract period.

**The** acquisition unit 213 of the information processing apparatus 20 mainly used by the business operator acquires the contract information on the outcome-based contract transmitted from the information processing apparatus 10. Further, the acquisition unit 213 acquires fund data related to funds set on the basis of the contract information. For example, the contract information includes the expense of the infrastructure development project, and raised funds are set on the basis of the expense. The funds include own funds, bonds, or the like. The fund data includes, for example, fund data related to own funds and fund data related to funds raised from other persons.

The fund management unit 214 stores the acquired fund data in the memory 230 in association with discrimination information on the infrastructure development project. The processing of the fund management unit 214 is the same as that of the fund management unit 214 in the specific example 1 except for the point that the discrimination information on the infrastructure development project is used.

Thus, the present invention can also be applied to the outcome-based contract in which at least part of an increased amount of money is paid to a business operator as a payment when the surrounding area of a developed infrastructure has been developed and an amount of money corresponding to an economic outcome such as a tax revenue has increased in an infrastructure development project.

Further, the economic outcome in the specific example 3 includes a profit calculated by a prescribed evaluation organization, the profit being an economic profit of an area in which the infrastructure is developed. For example, when a road, a railroad, or the like is developed as the infrastructure as described above, the economic profit includes the increase of the tax revenue of a surrounding area.

Note that as for the calculation of a payment, the infrastructure management unit 114 of the information processing apparatus 10 multiplies an amount of money corresponding to an economic profit by a third coefficient. The third coefficient may be calculated according to a prescribed calculation formula on the basis of an amount of money corresponding to the economic profit.

Thus, the achievement of an outcome is not based on an unpredictable event such as the occurrence of a disaster but is based on an increased amount of the economic profit of a surrounding area through the development of the infrastructure, whereby the probability of the achievement of the outcome can be increased, and the reception of a payment based on the outcome can be facilitated for the business operator.

Further, the contract information in the specific example 3 includes a payment condition based on the development cost of the infrastructure in a case in which an economic outcome does not satisfy a prescribed reference. For example, a minimum amount is set in the economic profit of a surrounding area, and the infrastructure management unit 114 of the information processing apparatus 10 determines whether the economic profit exceeds a threshold. When the economic profit exceeds the threshold, the infrastructure management unit 114 multiplies the economic profit by a third coefficient to calculate a payment. Further, when the economic profit is the threshold or less, the infrastructure management unit 114 multiplies the development cost of the infrastructure by a fourth coefficient to calculate a payment. The fourth coefficient may be calculated according to a prescribed calculation formula on the basis of the development cost.

Thus, a payment based on the development cost is paid to the business operator when the economic profit of a surrounding area is lower than an assumed profit, whereby the payment can be prevented from being lower than assumed and a motivation for participating in the project can be given to the business operator.

Further, the contract information in the specific example 3 may include a condition related to a right (fee collection right) to collect a fee charged when the infrastructure is used. For example, when the infrastructure is a highway, a railroad, or the like, the assignment of a right to collect at least part of the usage fee of such an infrastructure to the business operator is included in the contract information.

Thus, since the assignment of the fee collection right related to the infrastructure to the business operator is included in the contract information, the business operator can secure a stable income in exchange for fund raising and can be given a motivation for participating in the project.

### (Specific Example 4)

In a specific example 4, the outcome of the reduction of a greenhouse effect gas, for example, carbon dioxide (CO₂) is included as the outcome of an outcome-based contract in an infrastructure development project. For example, it is assumed that a business operator gives a low carbon technology able to reduce CO₂ emissions in an infrastructure development project, whereby a developed infrastructure can reduce CO₂ emissions. In this case, if an infrastructure owner acquires a CO₂ emission right according to a CO₂ reduction amount, a prescribed ratio of the CO₂ emission right is granted to the business operator as a return. The prescribed ratio may only be set by the infrastructure owner. However, when a country or a local municipal entity is the infrastructure owner, the CO₂ emission right may be totally granted to the business operator.

**An** example of the low carbon technology includes the use of low carbon type concrete, infrastructure development for disaster prevention (the reduction of CO₂ is possible through strengthening), the use of a nonmetal technology (the reduction of CO₂ is possible through ruggedization), or the like.

In the specific example 4, the transmission unit 115 of the information processing apparatus 10 transmits to the information processing apparatus 20 contract information on a contract related to a development project to develop an infrastructure, the contract being an outcome-based contract in which payment is made on the basis of a development outcome through the infrastructure. The development outcome includes, for example, at least one of a disaster reduction outcome through disaster prevention, an economic outcome through the infrastructure after the lapse of a prescribed contract period, and the like. Further, the development outcome may include the reduction effect of a greenhouse effect gas, for example, CO₂ as will be described later. Hereinafter, carbon dioxide will be illustrated as the greenhouse effect gas, but the greenhouse effect gas includes at least one of carbon dioxide, methane, dinitrogen monoxide, and chlorofluorocarbon.

The acquisition unit 213 of the information processing apparatus 20 mainly used by the business operator acquires the contract information on the outcome-based contract transmitted from the information processing apparatus 10. Further, the acquisition unit 213 acquires fund data related to funds set on the basis of the contract information. For example, the contract information includes the expense of the infrastructure development project as described above, and raised funds are set on the basis of the expense. The funds include own funds, bonds, or the like. The fund data includes, for example, fund data related to own funds and fund data related to funds raised from other persons.

The fund management unit 214 stores the acquired fund data in the memory 230 in association with discrimination information on the infrastructure development project. The discrimination information may only be set in advance for each project.

Further, when the reduction effect of CO₂ is included in the development outcome of the infrastructure, the setting unit 217 may set condition information on the acquisition condition of a CO₂ emission right based on a CO₂ reduction amount. The condition information includes, for example, information on a prescribed ratio with respect to the CO₂ emission right authenticated by an authentication organization or the like. The prescribed ratio may only be determined in advance with the infrastructure owner but may be determined afterwards. Further, the setting unit 217 may store the authenticated condition information in the memory 230 in association with the discrimination information on the infrastructure development project.

In this case, the transmission unit 216 may transmit the authenticated condition information to the transmission source of the contract information on the outcome-based contract. Accordingly, the condition information can be shared with the infrastructure owner.

Thus, the present invention can also be applied to the outcome-based contract in which, when the reduction effect of CO₂ is included as the development effect of a developed infrastructure in an infrastructure development project, a CO₂ emission right based on a CO₂ reduction amount is granted to a business operator besides or instead of payment based on the development effect. Note that the specific example 4 describes a CO₂ emission right as an example but is applicable when a tradable right is granted to an infrastructure owner through infrastructure development. For example, a prescribed ratio of a CO₂ emission right may be replaced by all or a part of a tradable right.

### (Specific Example 5)

In a specific example 5, the reduction effect of a greenhouse effect gas is included as the outcome of an outcome-based contract in an infrastructure development project like the specific example 4. However, the specific example 5 is different in that, when a disaster is prevented or a financial burden is avoided through infrastructure development in case of the occurrence of the disaster, a country grants a greenhouse effect gas emission right (for example, a CO₂ emission right) based on the reduction amount of a greenhouse effect gas to a business operator. The specific example 5 is applicable to the above specific examples 1 and 2 or the like.

For example, when it is assumed in the specific example 1 that an infrastructure owner is a country and the country grants a CO₂ emission right to a business operator in case of the occurrence of a disaster, the transmission unit 115 of the information processing apparatus 10 transmits to the information processing apparatus 20 contract information on a contract related to a development project to develop an infrastructure, the contract being an outcome-based contract in which a reward is granted on the basis of a development outcome through the infrastructure. The development outcome includes, for example, at least one of a disaster reduction outcome through disaster prevention, an economic outcome through the infrastructure after the lapse of a prescribed contract period, and the like. Further, the development outcome may include the reduction effect of a greenhouse effect gas, for example, CO₂ as described above. Further, carbon dioxide is exemplified as the greenhouse effect gas, but the greenhouse effect gas includes at least one of carbon dioxide, methane, dinitrogen monoxide, and chlorofluorocarbon. Further, the granting of the reward includes the payment of money from the infrastructure owner and/or the granting of the CO₂ emission right from an organization such as the country and a government.

The acquisition unit 213 of the information processing apparatus 20 mainly used by the business operator acquires the contract information on the outcome-based contract transmitted from the information processing apparatus 10. Further, the acquisition unit 213 acquires fund data related to funds set on the basis of the contract information.

The fund management unit 214 stores the acquired fund data in the memory 230 in association with discrimination information on the infrastructure development project. The discrimination information may only be set in advance for each project.

Further, the setting unit 217 may set condition information on the acquisition condition of a CO₂ emission right based on a CO₂ reduction amount. The condition information includes, for example, information on a prescribed ratio with respect to the CO₂ emission right authenticated by an authentication organization or the like. The prescribed ratio may only be determined in advance with the country but may be determined afterwards. Further, the setting unit 217 may store the authenticated condition information in the memory 230 in association with the discrimination information on the infrastructure development project.

When a disaster occurs and the prevention of damage through the infrastructure development is acknowledged by a prescribed organization, the authentication organization or the like calculates a damage amount prevented through the infrastructure development according to the outcome and the infrastructure owner pays α% of the damage amount to the business operator. The damage amount is calculated on the basis of, for example, assets, economy, finance, or the like of which the damage is prevented through the infrastructure development. For example, the information processing apparatus 10 performs payment processing for the business operator on the basis of a determined payment, and transmits payment data related to the payment to the information processing apparatus 20. Note that the prescribed organization may be the same as or different from the authentication organization.

Next, the country or the government grants a CO₂ emission right based on the reduction amount of CO₂ not required to be emitted through the damage prevention of the infrastructure development to the business operator as a reward. For example, the CO₂ emission right may be a CO₂ emission right of a prescribed % (for example, 100%, 80%, or the like) of the reduction amount of CO₂ not required to be emitted through the damage prevention. In this case, an information processing apparatus used by the country or the government transmits information on the determined CO₂ emission right to the information processing apparatus 20. The information processing apparatus that transmits the information on the CO₂ emission right may be the information processing apparatus 10 managed by the country serving as the infrastructure owner. Note that the restriction that the CO₂ emission right cannot be assigned to a third party may be imposed, and a digital token (NFT: Non-Fungible Token) or the like issued on a block chain having no substitutability may be granted. Further, the CO₂ emission right may be undertaken by the government anytime at a market price.

Next, when it is assumed in the specific example 2 that a country grants a CO₂ emission right to a business operator in case of the occurrence of a disaster, the transmission unit 115 of the information processing apparatus 10 transmits to the information processing apparatus 20 contract information on a contract related to a development project to make a building earthquake-resistant, the contract being an outcome-based contract in which a reward is granted on the basis of the outcome of the earthquake resistance of the building. The granting of the reward includes the payment of money based on the increase of a rent from a building owner and/or the granting of a CO₂ emission right from an organization such as the country and a government.

When a disaster occurs and the prevention of damage through the earthquake resistance of the building is acknowledged by a prescribed organization, an authentication organization or the like calculates a damage amount prevented through the earthquake resistance of the building according to the outcome and pays α% of the damage amount to the business operator. The damage amount is calculated on the basis of, for example, assets, economy, finance, or the like of which the damage is prevented through the earthquake resistance of the building. For example, an information processing apparatus used by the country or the government performs payment processing for the business operator on the basis of a determined payment, and transmits payment data related to the payment to the information processing apparatus 20. Note that the prescribed organization may be the same as or different from the authentication organization.

Next, the country or the government grants a CO₂ emission right based on the reduction amount of CO₂ not required to be emitted through the damage prevention of the earthquake resistance of the building to the business operator as a reward. In this case, the information processing apparatus used by the country or the government transmits information on the determined CO₂ emission right to the information processing apparatus 20. Note that the restriction that the CO₂ emission right cannot be assigned to a third party may be imposed. Further, the CO₂ emission right may be undertaken by the government anytime at a market price.

Further, when it is assumed in the specific example 2 that the country grants a CO₂ emission right to a business operator in case of the occurrence of a disaster, a reward system different from the example described above may be provided. For example, before the occurrence of a disaster, the information processing apparatus 10 used by the building owner performs payment processing for the business operator on the basis of a payment determined on the basis of a rent increased due to the earthquake resistance of the building and transmits payment data related to the payment to the information processing apparatus 20. Further, the country or the government pays an amount of money (for example, α% of a damage amount assumed in case of the occurrence of a disaster/a contract year) corresponding to the economic effect of disaster prevention through the earthquake resistance of the building to the business operator every year. For example, the information processing apparatus used by the country or the government performs payment processing on the basis of the determined amount of money and transmits payment data related to the amount of money to the information processing apparatus 20.

When a disaster occurs and the prevention of damage through the earthquake resistance of the building is acknowledged by the prescribed organization, the authentication organization or the like calculates a damage amount prevented through the earthquake resistance of the building according to the outcome and pays the remaining amount of α% of the damage amount to the country or the business operator. The damage amount is calculated on the basis of, for example, assets, economy, finance, or the like of which the damage is prevented through the earthquake resistance of the building. For example, the information processing apparatus used by the country or the government performs payment processing for the business operator on the basis of a determined remaining amount and transmits payment data related to the remaining amount to the information processing apparatus 20. Note that the prescribed organization may be the same as or different from the authentication organization.

Further, the country or the government grants a CO₂ emission right based on the reduction amount of CO₂ not required to be emitted through the damage prevention of the earthquake resistance of the building to the business operator as a reward. In this case, the information processing apparatus used by the country or the government transmits information on the determined CO₂ emission right to the information processing apparatus 20. Note that the restriction that the CO₂ emission right cannot be assigned to a third party may be imposed. Further, the CO₂ emission right may be undertaken by the government anytime at a market price.

**The** specific examples 1 to 5 are described above, and each of the examples describes an outcome-based contract. Therefore, a business operator is expected to effectively use raised funds and construct a better infrastructure in order to increase a payment or the like based on the evaluation of the infrastructure. Along with the construction of the better infrastructure, even an infrastructure owner can benefit from an economic profit through the infrastructure. That is, with the application of the outcome-based contract, the business operator can be given an incentive for improving the evaluation of the infrastructure to increase the payment or the like, and the infrastructure owner can increase the possibility of reliably performing an infrastructure development project and boosting the infrastructure development project.

### <Data Examples>

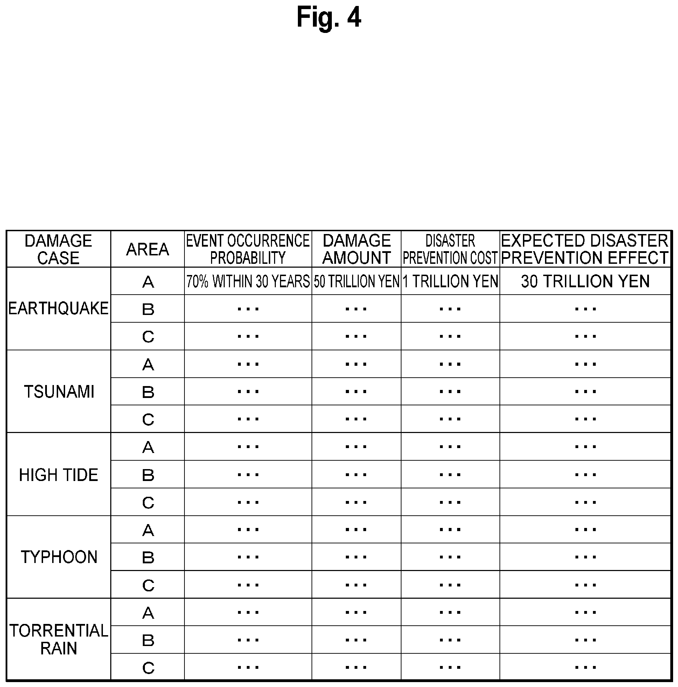

Fig. 4 is a diagram showing an example of the evaluation data of the specific example 1 in the present invention. The example shown in Fig. 4 is evaluation data stored in the memory 130 of the information processing apparatus 10. For example, the evaluation data is evaluation data in a certain infrastructure disaster prevention project, and a "damage case", an "area", an "event occurrence probability", a "damage amount", a "disaster prevention cost (development cost) ", and an "expected disaster prevention effect" are stored in the memory 130 in association with each other.

The "damage case" represents, for example, a disaster and includes an earthquake, a tsunami, a high tide, a typhoon, torrential rain, or the like. The above example describes a natural disaster but may include a human disaster such as a fire. The "area" represents, for example, an administrative district and is divided on a municipality basis or a prefecture basis.

**The** "event occurrence probability" represents an occurrence probability calculated by a prescribed organization through research or the like on the basis of past cases. For example, it is expressed that an earthquake will occur in an area A with a probability of 70% within 30 years. The "damage amount" represents an assumed damage amount when a disaster shown in the "damage case" occurs in the area. The "disaster prevention cost" represents the expense of constructing a disaster prevention infrastructure in the area. The "expected disaster prevention effect" represents an evaluation amount by which a disaster can be reduced when a disaster prevention infrastructure is constructed.

Note that discrimination information on the infrastructure disaster prevention project and a disaster reduction outcome evaluated by a prescribed organization when a disaster actually occurs may also be stored in the evaluation data so as to be associated. Further, the evaluation data includes an item set by an evaluation organization but may also include an item set by an infrastructure owner.

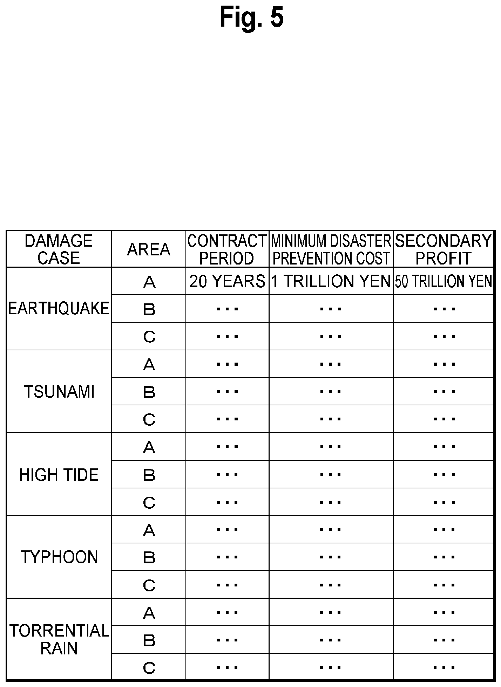

Fig. 5 is a diagram showing an example of the public data of the specific example 1 in the present invention. In the example shown in Fig. 5, the public data is public data stored in the memory 130 of the information processing apparatus 10. For example, a "damage case", an "area", a "contract period", a "minimum disaster prevention cost", and a "secondary profit" are stored in the memory 130 in association with each other in the public data. Note that the acquisition unit 213 of the information processing apparatus 20 may store the public data in the memory 230 when receiving the public data.

The "damage case" and the "area" are the same as those shown in Fig. 4. The "contract period" represents the contract period of an outcome-based contract related to an infrastructure development project. The "secondary profit" is a secondary profit obtained through the development of an infrastructure and is, for example, a usage fee or the like through the development of a road or a railroad. Note that the public data includes a part of contract information on the outcome-based contract. For example, the contract information includes a contract period, condition information on a payment condition described above, a prescribed condition that triggers the charge of a payment, or the like.

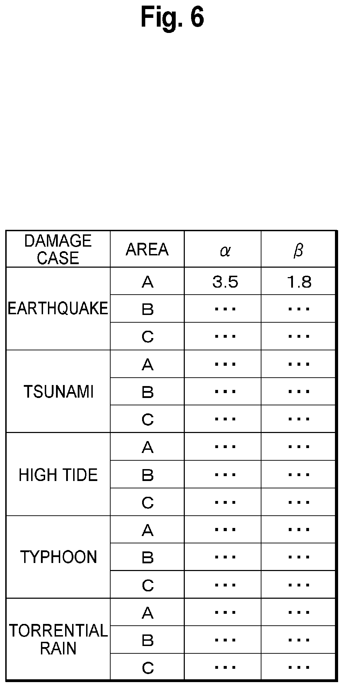

Fig. 6 is a diagram showing an example of the coefficient data of the specific example 1 in the present invention. In the example shown in Fig. 4, the coefficient data is coefficient data stored in the memory 230 of the information processing apparatus 20. For example, the coefficient data is a coefficient related to a payment set by a business operator, and "α" and "β" represent a first coefficient and a second coefficient described above, respectively. The coefficient data is data included in contract information. As for the respective data shown in Figs. 4 to 6, the contents of the basic data are also the same in the specific examples 2 to 5. However, the contents of a part of evaluation data, public data, or coefficient data may be different depending on the specific examples 2 to 5 described above. For example, in the specific example 3, the third coefficient and the fourth coefficient are stored in the memory 230 in association with discrimination information on an infrastructure development project as coefficient data. The third coefficient and the fourth coefficient are values set by respective business operators and set according to various methods. Further, in the specific examples 4 and 5, a prescribed ratio of a CO₂ emission right is stored in the memory 230 in association with discrimination information on an infrastructure development project.

### <Description of Operation>

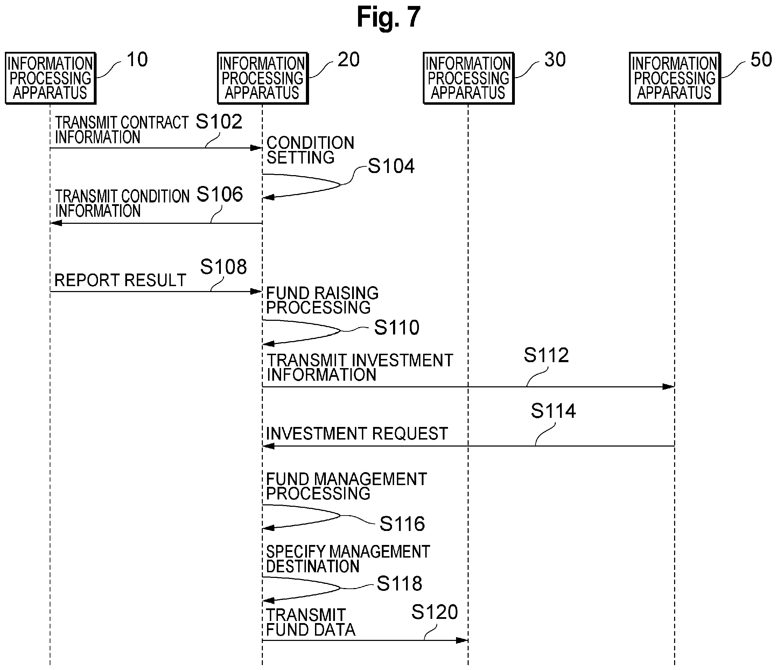

Next, respective operations related to fund raising in the information processing system 1 will be described. Fig. 7 is a sequence diagram showing an example of processing related to fund raising according to an embodiment of the present invention. The processing shown in Fig. 7 is similarly applicable to the specific examples 1 to 5.

In step S102, the transmission unit 115 of the information processing apparatus 10 transmits contract information on an infrastructure development project to the information processing apparatus 20 through the operation of an infrastructure owner or the like. The contract information may be public data and includes data open to the public that is used by the infrastructure owner to select the business operator of the infrastructure development project.

In step S104, the fund management unit 214 of the information processing apparatus 20 sets a condition related to a payment on the basis of the contract information. For example, the fund management unit 214 sets a first coefficient and/or a second coefficient on the basis of a contract period, a development cost, a secondary profit, or the like included in the contract information. As a method for setting the coefficients, the respective coefficients may be calculated and set by inputting the contract period, the development cost, the secondary profit, or the like to a prescribed calculation formula or may be calculated and set by using a learned model.

In step S106, the transmission unit 216 of the information processing apparatus 20 transmits condition information including the set coefficients to the information processing apparatus 10. Through the processing, the business operator tenders for the project.

In step S108, the infrastructure owner determines a company or the like (fund raiser) entrusted with the infrastructure development project, and the transmission unit 115 of the information processing apparatus 10 transmits the result of the tender to the information processing apparatus 20.

In step S110, the fund management unit 214 of the information processing apparatus 20 performs fund raising processing. The fund raising processing may be processing to apply own funds or may be processing to receive investments from other persons to raise funds. Steps S112 and S114 are processing performed when the fund management unit 214 receives investments from other persons, and are not necessarily required when the fund management unit 214 raises funds only from own funds.

In step S112, the fund management unit 214 of the information processing apparatus 20 determines a received amount of an investment in consideration of a development cost required for the infrastructure development project, and the transmission unit 216 transmits investment information including an investment condition including the investment amount and information on a return to the information processing apparatuses 50 used by other persons.

In step S114, the information processing apparatus 50 determines an investment amount on the basis of the investment information and transmits an investment request including the investment amount to the information processing apparatus 20.

In step S116, the fund management unit 214 of the information processing apparatus 20 stores fund data related to the acquired investment amount (the funds of the infrastructure development project) in the memory 230 in association with discrimination information on the infrastructure development project. Thus, the fund management unit 214 can manage the raised funds.

In step S118, the specification unit 215 of the information processing apparatus 20 specifies the management destination of the infrastructure development project. The management destination of the infrastructure development project is stored in the memory 230 in association with the contract information or the like.

In step S120, the transmission unit 216 of the information processing apparatus 20 transmits fund data related to the raised funds to the management destination.

By the processing described above, an incentive is given on the basis of the content of contract information on an outcome-based contract as a trade-off representing a return when the outcome-based contract is applied to an infrastructure development project, which makes a business operator easily participate in the infrastructure development project.

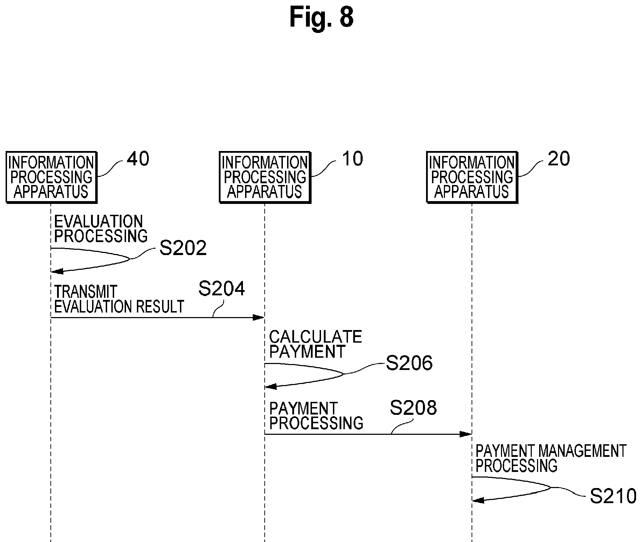

Fig. 8 is a sequence diagram showing an example of payment processing according to an embodiment of the present invention. The processing shown in Fig. 8 is similarly applicable to the specific examples 1 to 5.

In step S202, the information processing apparatus 40 used by an organization that performs evaluation evaluates an economic outcome through an infrastructure. The economic outcome may be an estimated amount of money.

In step S204, the information processing apparatus 40 transmits evaluation data including an evaluation result to the information processing apparatus 10 used by an infrastructure owner.

In step S206, the infrastructure management unit 114 of the information processing apparatus 10 calculates, on the basis of the economic outcome included in the evaluation result, a payment by referring to contract information on an outcome-based contract. For example, the infrastructure management unit 114 calculates the payment using a first coefficient as an amount of money corresponding to the economic outcome.

In step S208, the infrastructure management unit 114 of the information processing apparatus 10 performs payment processing to pay the calculated payment to a business operator. For example, the infrastructure management unit 114 performs transfer processing to transfer the payment to a prescribed bank. The transmission unit 115 of the information processing apparatus 10 transmits payment data related to the payment to the information processing apparatus 20. The payment data is, for example, data showing that the payment has been made.

In step S210, the acquisition unit 213 of the information processing apparatus 20 acquires the payment data, and the fund management unit 214 manages the payment on the basis of the payment data and performs payment processing for a fund providing source at a prescribed timing where necessary.

By the above processing, an evaluation organization serving as a third party evaluates an economic outcome through an infrastructure at a prescribed timing, an infrastructure owner determines a payment as a return for fund raising in an infrastructure development project on the basis of the evaluation result, and a business operator is allowed to receive the payment.

Further, a payment setting condition or the like is included in contract information on an outcome-based contract, whereby payment processing can be smoothly performed after the completion of evaluation processing and the increase of system efficiency is made possible. Further, the information processing apparatus 20 has a payment setting condition and therefore can easily perform confirmation processing to confirm whether a payment is correct after acquiring an evaluation result. The information processing apparatus 20 eliminates the need to perform the confirmation processing again and makes it possible to increase processing efficiency for the confirmation processing. Note that a return is not limited to a payment but may be a fee collection right in the specific example 3, a prescribed bond such as a greenhouse effect gas emission right in the specific examples 4 and 5, or the like.

The embodiments of the present invention are described in detail above, but the present invention is not limited to the above embodiments. Within the scope of claims, various deformations and modifications are possible. For example, in the present invention, a part of the processing performed by the respective information processing apparatuses 10 to 50 may be transferred to other information processing apparatuses, or a plurality of information processing apparatuses may be adequately integrated with each other.

### Reference Signs List

- 1: Information processing system

- 10 to 50: Information processing apparatus

- 110: CPU
- 112: Control unit
- 113: Acquisition unit
- 114: Infrastructure management unit
- 115: Transmission unit
- 130: Memory
- 210: CPU
- 230: Memory
- 212: Control unit
- 213: Acquisition unit
- 214: Fund management unit
- 215: Specification unit
- 216: Transmission unit
- 217: Setting unit

## Claims

1. An information processing method performed by an information processing apparatus, the information processing method comprising:
acquiring contract information on a contract related to a disaster prevention project to develop an infrastructure, the contract being an outcome-based contract in which payment is made on a basis of a disaster reduction outcome through the infrastructure;
acquiring fund data related to a fund set on a basis of the contract information; and
associating the fund data with discrimination information on the disaster prevention project.

2. The information processing method according to claim 1, wherein
the information processing apparatus further
specifies a management destination of the disaster prevention project on a basis of the discrimination information, and
transmits the fund data to the management destination.

3. The information processing method according to claim 1 or 2, wherein
the information processing apparatus further
sets a payment condition related to the payment on a basis of the contract information, and
transmits condition information including the payment condition to a transmission source of the contract information.

4. The information processing method according to claim 3, wherein,
in a case in which a contract period and an amount of money corresponding to the disaster reduction outcome are included in the contract information, the setting of the payment condition includes setting a first coefficient which is applied to the amount of money corresponding to the disaster reduction outcome on a basis of at least the contract period and the amount of money corresponding to the disaster reduction outcome if a damage occurs in the infrastructure during the contract period.

5. The information processing method according to claim 3 or 4, wherein,
in a case in which a contract period and a development cost are included in the contract information, the setting of the payment condition includes setting a second coefficient which is applied to the development cost on a basis of at least the contract period and the development cost if a damage does not occur in the infrastructure during the contract period.

6. The information processing method according to claim 4 or 5, wherein
the information processing apparatus further
acquires probability data related to probability of occurrence of the damage from a prescribed database, and
the setting of the payment condition includes
setting the first coefficient or the second coefficient further on a basis of the probability data.

7. The information processing method according to any one of claims 1 to 6, wherein
the acquisition of the fund data includes
transmitting investment information on the fund to another information processing apparatus, and
acquiring an investment request including an investment amount set on a basis of the investment information from the other information processing apparatus, and
the association of the fund data with the discrimination information includes associating fund data related to each investment amount included in each acquired investment request with the discrimination information.

8. The information processing method according to any one of claims 1 to 7, wherein
the infrastructure includes a structure accompanied by a charge of a rent,
the disaster prevention project includes construction related to earthquake resistance, and
the contract information includes a payment condition based on a rent income increased due to the earthquake resistance.

9. A program causing an information processing apparatus to perform:
acquiring contract information on a contract related to a disaster prevention project to develop an infrastructure, the contract being an outcome-based contract in which payment is made on a basis of a disaster reduction outcome through the infrastructure;
acquiring fund data related to a fund set on a basis of the contract information; and
associating the fund data with discrimination information on the disaster prevention project.

10. An information processing apparatus comprising:
an acquisition unit that acquires contract information on a contract related to a disaster prevention project to develop an infrastructure, the contract being an outcome-based contract in which payment is made on a basis of a disaster reduction outcome through the infrastructure, and acquires fund data related to a fund set on a basis of the contract information; and
a fund management unit that associates the fund data with discrimination information on the disaster prevention project.

11. An information processing method performed by an information processing apparatus, the information processing method comprising:
acquiring contract information on a contract related to a development project to develop an infrastructure, the contract being an outcome-based contract in which payment is made on a basis of an economic outcome through the infrastructure after a lapse of a prescribed contract period;
acquiring fund data related to a fund set on a basis of the contract information; and
associating the fund data with discrimination information on the development project.

12. The information processing method according to claim 11, wherein
the economic outcome includes a profit calculated by an evaluation organization, the profit being an economic profit of an area in which the infrastructure is developed.

13. The information processing method according to claim 11 or 12, wherein
the contract information includes a payment condition based on a development cost of the infrastructure in a case in which the economic outcome does not satisfy a prescribed reference.

14. The information processing method according to any one of claims 11 to 13, wherein
the contract information includes a condition related to a right to collect a usage fee of the infrastructure.

15. An information processing method performed by an information processing apparatus, the information processing method comprising:
acquiring contract information on a contract related to a development project to develop an infrastructure, the contract being an outcome-based contract in which payment is made on a basis of a development outcome through the infrastructure;
acquiring fund data related to a fund set on a basis of the contract information;
associating the fund data with discrimination information on the development project;
setting condition information on an acquisition condition of a greenhouse effect gas emission right based on a reduction amount of a greenhouse effect gas in a case in which a reduction effect of the greenhouse effect gas is included in the development outcome; and
transmitting the condition information to a transmission source of the contract information.
